# EUROPÄISCHE PATENTANMELDUNG

(11) **EP 4 201 849 A1**
(43) Veröffentlichungstag der Anmeldung: **28.06.2023**
(21) Anmeldenummer: 22157555.8
(22) Anmeldetag: 18.02.2022
(51) Int. Cl.: B65G 43/00, G05B 19/418, G06N 3/08

(54) **VERFAHREN ZUM BETREIBEN EINER FÖRDERANORDNUNG**

(30) Priorität: 23.12.2021 EP 21217526
(71) Anmelder: Interroll Holding AG, 6592 Sant' Antonino (CH)
(72) Erfinder: Ripperda, Christian, 41836 Hückelhoven (DE)
(74) Vertreter: Kohlhof, Stephan

(57) **Zusammenfassung**

Verfahren zum Betreiben einer Förderanordnung (1), insbesondere umfassend die Steuerung und/oder die Überwachung der Förderanordnung,
die Förderanordnung (1) umfasst eine Mehrzahl an Fördersegmenten (2a..e), jedes Fördersegment (2) ist eingerichtet zur Förderung eines Förderguts (9) entlang einer Förderrichtung (F);
die Fördersegmente (2) sind derart nacheinander angeordnet, damit das Fördergut (9) von einem stromaufwärtigen Fördersegment (2a..2d) an ein stromabwärtiges Fördersegment (2b..e) übergeben wird,
jedes Fördersegment (2) weist einen Fördersegmentantrieb (3M) auf, der eingerichtet ist, eine Antriebskraft, insbesondere isoliert für dieses Fördersegment, bereitzustellen, um so das Fördergut (9) auf diesem Fördersegment zu fördern;
jedem Fördersegment (2) ist eine Zonensteuerung (11) zur Steuerung des Fördersegmentantriebs (3M) zugeordnet;
das Verfahren umfasst die folgenden Verfahrensschritte:
Erfassen von Fördersegmentdaten (R), die beim Betrieb eines Fördersegments (2) anfallen, und
Sammeln von Fördersegmentdaten (R) von einer Vielzahl von Fördersegmenten.

## Beschreibung

Die Erfindung betrifft ein Verfahren zum Betreiben einer Förderanordnung.

Die EP 1 361 182 B1 offenbart eine Fördervorrichtung mit einer Vielzahl von Rollen zur Förderung eines Artikels und einem Motor zum Antreiben der Rollen. Die Fördervorrichtung ist in eine Vielzahl von Fördersegmenten (in der EP 1 361 182 B1 als "module 2" bezeichnet) unterteilt. Anhand einer Steuerung wird die Tätigkeit des Motors gesteuert. Pro Fördersegment isoliert wird der Rotationszustand von einer Rolle des Fördersegments ermittelt. Durch Vergleich mit einem Standardwert kann isoliert auf das Fördersegment der gegenwärtige Status eines Förderguts bestimmt werden.

Das in der EP 1 361 182 B1 beschrieben Vorgehen ermöglicht Erkennung bestimmter Situationen isoliert an einem Fördersegment auf Basis vordefinierter Standardwerten.

Es ist Aufgabe der vorliegenden Erfindung, das Betreiben einer Förderanordnung effizienter und effektiver zu gestalten. Die der Erfindung zugrundeliegende Aufgabe wird gelöst durch ein Verfahren nach Anspruch 1; Ausgestaltungen sind Gegenstand der Unteransprüche sowie der Beschreibung.

Die Erfindung sieht vor, die beim Betrieb der Fördersegmenten anfallenden Fördersegmentdaten definiert zu sammeln und auszuwerten. Aus den Auswertungen lassen sich eine Vielzahl von Erkenntnissen herleiten, die für den weiteren Betrieb von Vorteil sind.

Ein Aspekt betrifft dabei die Identifizierung von Datenmustern aus den Fördersegmentdaten. Diese Identifizierung macht es sich dabei zu Nutze, dass eine Vielzahl von Fördergüter über eine Vielzahl an Fördersegmenten in der Förderanordnung gefördert werden. Insofern kann in diesem Anwendungsfall einer Big-Data Analyse ein großer Datenschatz ausgewertet werden, der sich insbesondere durch ein hohes Maß an Vergleichbarkeit durch identische Rahmenbedingungen auszeichnet. Daher weisen die hierbei identifizierten Datenmuster ein besonders hohes Maß an Aussagekraft auf.

Grundsätzlich wird im Rahmen der vorliegenden Erfindung eine immense Menge von Daten generiert, die anhand z.B. eines selbstlernendes System, von neuronalen Netzen untersucht werden. Die Ergebnisse solcher Untersuchungen sind zunächst offen, versprechen aber Hinweise auf wirtschaftlich/technisch nutzbare Erkenntnisse.

In einer Ausgestaltung nimmt das Verfahren explizit eine Unterscheidung vor zwischen fördergutspezifischen Datenmustern und von fördersegmentspezifischen Datenmustern.

Ein fördergutspezifisches Datenmuster kann einen Hinweis auf eine bestimmte Eigenschaft des Förderguts darstellen, insbesondere in Relation zu einem oder mehreren anderen Fördergütern. Durch diese Eigenschaft kann sich das jeweilige Fördergut z.B. körperlich von einem anderen Fördergut unterscheiden. Werden nacheinander zwei identische Fördergüter auf demselben oder einem identischen Fördersegment gefördert, so lassen sich die beim Fördervorgang erfassten Daten somit durch ein zugehöriges fördergutspezifisches Muster nicht voneinander unterscheiden.

Die Identifizierung der Datenmuster erfolgt dabei insbesondere aufgrund eines Kontinuitätskriteriums im Regelbetrieb. Das Kontinuitätskriterium berücksichtigt dabei die zwangsläufige Tatsache, dass ein Fördergut immer zunächst an einem stromaufwärtigen Fördersegment präsent ist und nachfolgend an einem stromabwärtigen Fördersegment präsent ist. Aber auch ein Abhandenkommen eines Förderguts kann unmittelbar ermittelt werden, sobald an einem Fördersegment ein fördergutspezifisches Datenmuster in den dort anfallenden Fördersegmentdaten wider Erwarten nicht auftaucht.

Ein fördersegmentspezifisches Datenmuster kann immer dann auftreten, wenn ein jeweiliges Fördersegment eine bestimmte Eigenschaft aufweist ggf. Relation zu einem oder mehreren anderen Fördersegmenten. Von besonderem Interessen ist dabei ein solches fördersegmentspezifisches Datenmuster, wenn dieses in Relation zu den Fördersegmentdaten zumindest eines anderen Fördersegments auftritt, welches identisch zum jeweiligen Fördersegment ausgebildet ist.

Hierdurch kann auf eine Eigenschaft des jeweiligen Fördersegments rückgeschlossen werden, durch das sich das jeweilige Fördersegments von dem anderen Fördersegmenten unterscheidet. Sind die Fördersegmente identisch ausgebildet, so kann die Eigenschaft mit einem Defekt verbunden sein, der somit anhand der identifizierten Datenmuster entdeckt werden kann.

Auf die vorgenannte Weise lassen sich die anfallenden Fördersegmentdaten für unterschiedlichste Zwecke nutzen, wie z.B. der Erkennung von Anomalien an Fördergütern und Fördersegmenten.

Eine Besonderheit stellt dabei die Identifizierung der Datenmuster und Nutzung im laufenden Betrieb dar. Die Erzeugung der spezifischen Datenmuster erfordert dabei keine Anlernung im Vorfeld; vielmehr erfolgt die Erzeugung der Datenmuster fortwährend im laufenden Betrieb. Das Verfahren bildet somit selbst kontinuierlich weiter. Während im Stand der Technik oftmals vordefinierte Werte als Referenz zur Fehlererkennung verwendet werden (z.B. EP 1 361 182 B1), kommt die vorliegende Erfindung ohne eine solche Vordefinierung aus. Vereinfacht ausgedrückt: Das Verfahren ist in der Lage, sich anhand von Beobachtungen selbst virtuelle Referenzobjekte zu schaffen. Insofern zeichnet sich die Analysefähigkeit durch eine hohe Dynamik aus, die anhand von vordefinierten Standardwerte - wie im Stand der Technik - nicht erreichbar ist.

Aufgrund der Vielzahl von Fördergütern und der Vielzahl von Fördersegmenten kann dabei im Regelbetrieb bereits nach kurzer Betriebszeit ein enormer Datenschatz erzeugt werden, der auf Datenmuster und damit auf Abnormalitäten hin untersucht werden kann.

In einem optionalen Spezifizierungsschritt ist es vorgesehen, dass die Datenmuster einer Musterspezifikation zugeordnet werden. Die Zuordnung kann dabei unmittelbar mit der Identifizierung erfolgen und muss nicht nachgelagert sein. In dem Spezifizierungsschritt wird entschieden, ob ein Datenmuster entweder fördersegmentspezifisch oder fördergutspezifisch ist.

Die Zonensteuerung kann durch eine Steuerungseinheit gebildet sein, die die Ansteuerung mehrerer Fördersegmente übernimmt. Die Zonensteuerung kann separat ausgebildet sein oder innerhalb einer Förderrolle angeordnet sein (siehe z.B. WO 2020/127686 A1).

Als Präsenzerkennung muss nicht zwangsläufig ein expliziter Präsenzsensor vorgesehen sein; die Präsenzerkennung auf Basis der Auswertung von isolierten Motordaten kann genügen (siehe z.B. EP 1 361 182 B1 und WO 2020/127687 A1).

Ein Fördersegmentantrieb ist insbesondere dazu eingerichtet, eine Antriebskraft, isoliert für das zugeordnete Fördersegment bereitzustellen. Jedes Fördersegment weist insbesondere einen separaten Fördersegmentantrieb auf. Insbesondere grenzen sich benachbarte Fördersegmente dadurch voneinander ab, dass diese separat antreibbar sind.

Insbesondere stehen die Förderanordnungen eines Fördernetzwerks nicht derart miteinander in Wechselwirkung, dass innerhalb des Fördernetzwerks ein gemeinsamer Förderzweck verfolgt wird. Insbesondere erfolgt innerhalb des Fördernetzwerks kein Austausch von Fördergütern. Vielmehr dient das Fördernetzwerks zum Bereitstellen von Daten insbesondere zur wechselseitigen Optimierung von Verfahrensabläufen.

Die Erfindung ist insbesondere anwendbar bei Förderanordnungen, die derart betrieben werden, dass in jedem Fördersegment (im Regelbetrieb) stets maximal ein Fördergut gefördert wird, und dass das Fördergut von einem stromaufwärtigen Fördersegment an ein stromabwärtiges Fördersegment gefördert wird.

Die Erfindung wird anhand der Figuren nachfolgend näher erläutert, hierin zeigt:
- Fig. 1: ein Fördersegment für eine Förderanordnung in perspektivischer Darstellung;
- Fig. 2: eine Förderanordnung mit einer Mehrzahl an Fördersegmenten nach Figur 1 in perspektivischer Darstellung;
- Fig. 3: eine Auswahl an Fördersegmentdaten eines ersten Datensatzes eines ersten Fördersegments der Förderanordnung nach Figur 2, die während des Betriebs generiert werden;
- Fig. 4: eine Auswahl an Fördersegmentdaten eines zweiten Datensatzes eines zweiten Fördersegments der Förderanordnung nach Figur 2 entsprechend der Auswahl nach Figur 3;
- Fig. 5: eine Datensammlung mit einer Vielzahl an Datensätzen umfassend die Datensätze aus den Figuren 3 und 4 und den Datensätzen weiterer Fördersegmente;
- Fig. 6: eine Datensammlung analog Figur 5 mit einem fördergutbezogenen Datenmuster;
- Fig. 7: eine Auswahl an Fördersegmentdaten des ersten Datensatzes des ersten Fördersegments der Förderanordnung nach Figur 2, die während des Betriebs generiert werden;
- Fig. 8: eine Auswahl an Fördersegmentdaten des zweiten Datensatzes des zweiten Fördersegments der Förderanordnung nach Figur 2 entsprechend der Auswahl nach Figur 7;
- Fig. 9: eine Datensammlung mit einer Vielzahl an Datensätzen umfassend die Datensätze aus Figuren 7 und 8 und den Datensätzen weiterer Fördersegmente;
- Fig 10.: ein Fördernetzwerk mit einer Mehrzahl an Förderanordnungen nach Figur 2 in schematischer Darstellung;
- Fig. 11: eine Förderanordnung des Fördernetzwerks aus Figur 2 in schematischer Darstellung;
- Fig. 12: ausschnittsweise eine Abwandlung der Förderanordnung nach Figur 11;
- Fig. 13: eine Förderanordnung mit angeschlossener Anzeigevorrichtung in einem ersten Anzeigezustand;
- Fig. 14: eine Förderanordnung mit angeschlossener Anzeigevorrichtung in einem zweiten Anzeigezustand;
- Fig. 15: a) die Anzeigevorrichtung aus Figur 14 mit eingefärbten Fördersegmenten mit zugehörigen Fördersegmentdaten,
b) eine Auswahl von Fördersegmentdaten, die Grundlage für die Anzeige nach Figur 15a sind;
- Fig. 16: graphische Farbzuordnungen aus der Anzeige nach Figur 15 in Einzeldarstellung in unterschiedlichen Zuständen;
- Fig. 17: Werteverteilungen als Basis für eine automatische Festlegung einer Farbzuordnung;
- Fig. 18: eine schematische Ansicht eines besonderen Förderguts.

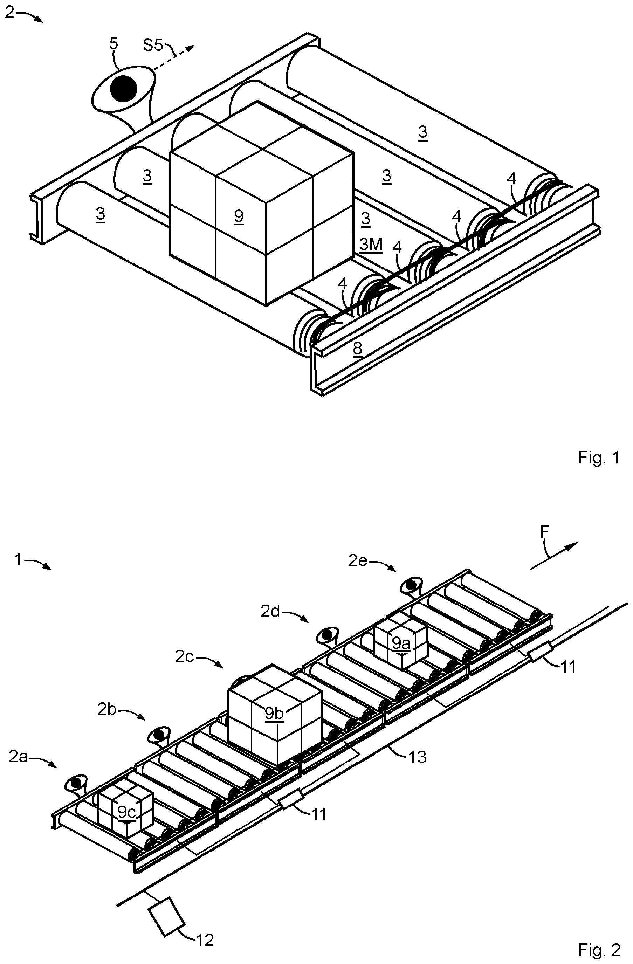

Die Figuren 1 und 2 werden nachfolgend gemeinsam beschrieben. Figur 2 zeigt eine Förderanordnung 1, die mehrere Fördersegmente 2a..2e umfasst. Solche Fördersegmente sind in Einzelheit in Figur 1 dargestellt.

Ein Fördersegment 2 umfasst mehrere Förderrollen 3, die gemeinsam angetrieben werden. Dazu ist eine der Förderrollen 3 als motorbetriebene Förderrolle 3M ausgebildet. Die motorbetriebene Förderrolle 3M wird insbesondere durch einen in der Förderrolle 3M angeordneten Drehstrommotor angetrieben. Über einen oder mehrere Antriebsverbinder 4, z.B. einen Antriebsriemen, sind die Förderrollen 3 eines Fördersegmentes 2 untereinander antriebsverbunden und werden durch die motorbetrieben Förderrolle 3M gemeinsam angetrieben.

Anhand eines Präsenzsensor 5 kann die Präsenz eines auf dem Fördersegment angeordneten Förderguts ermittelt werden. Der Präsenzsensor 5 muss dabei nicht das gesamte Fördersegment 2 erfassen; es genügt, wenn die Präsenz eines Förderguts 9 innerhalb eins Teilbereichs des Fördersegments 2 durch Präsenzsensor 5 erkannt wird. Der Präsenzsensor 5 erzeugt dabei ein Sensorsignal S5, welches über eine nicht dargestellte Signalleitung mit einer weiter unten vorgestellten Zonensteuerung 11 verbunden ist. Die Präsenserkennung kann auch ohne einen expliziten Sensor erfolgen und aus anderen Rohdaten abgeleitet werden. So gibt es bereits Ansätze, die Anwesenheit eines Förderguts auf dem Fördersegment aus anderen Daten herzuleiten, z.B. aus dem Verlauf der Stromstärke in einem Fördersegment.

Die Förderrollen 3 sowie der Präsenzsensor 5 sind an einem gemeinsamen Stützrahmen 8 befestigt. Die Förderrollen 3 von mehreren Fördersegmenten 2 können an einem gemeinsamen Stützrahmen 8 befestigt sein.

Die Fördersegmente 2 sind in der Förderanordnung 1 entlang einer Förderrichtung F hintereinander angeordnet. Von der Förderanordnung 1 werden die Fördergüter 9a..9c von einem Fördersegment 2a..2d auf das jeweils in Förderrichtung dahinter angeordnete (stromabwärtige) Fördersegment 2b..2e gefördert.

Die motorbetriebenen Förderrollen werden dabei jeweils von einer Zonensteuerung 11 angesteuert. Eine Zonensteuerung 11 kann dabei die motorbetriebenen Förderrollen mehrerer Fördersegmente 2 ansteuern. In der Förderanordnung 1 sind mehrere solcher Zonensteuerungen 11 angeordnet, die untereinander über eine Busverbindung 13 kommunizieren.

Die Zonensteuerungen 11 steuern dabei die motorbetriebenen Förderrollen 3M derart an, dass die nacheinander herangeförderten Fördergüter 9 nicht miteinander kollidieren. Die Ansteuerung erfolgt dabei derart, dass im Wesentlichen nur ein Fördergut 9 pro Fördersegment 2 vorhanden ist. Zu geringfügigen Überlappungen darf es allerdings kommen. So kann ein stromaufwärtiges Fördergut 9b bereits in ein Fördersegment 2d einfahren, obwohl das stromabwärtige Fördergut 9a diese Fördersegment 2d noch nicht vollständig verlassen hat. Als Eingangsgröße dient dabei unter anderem die Sensorsignale S5 der Präsenzsensoren 5, wobei allerdings sichergestellt wird, dass sich die beiden Fördergüter dann nicht berühren und damit gegenseitig beschädigen können.

In einer Ausgestaltung sind die die Zonensteuerungen 11 mit einer gemeinsamen übergeordneten Anlagensteuerung 12 verbunden, insbesondere über die Busverbindung 13, mit der auch die Zonensteuerungen 11 untereinander verbunden sind.

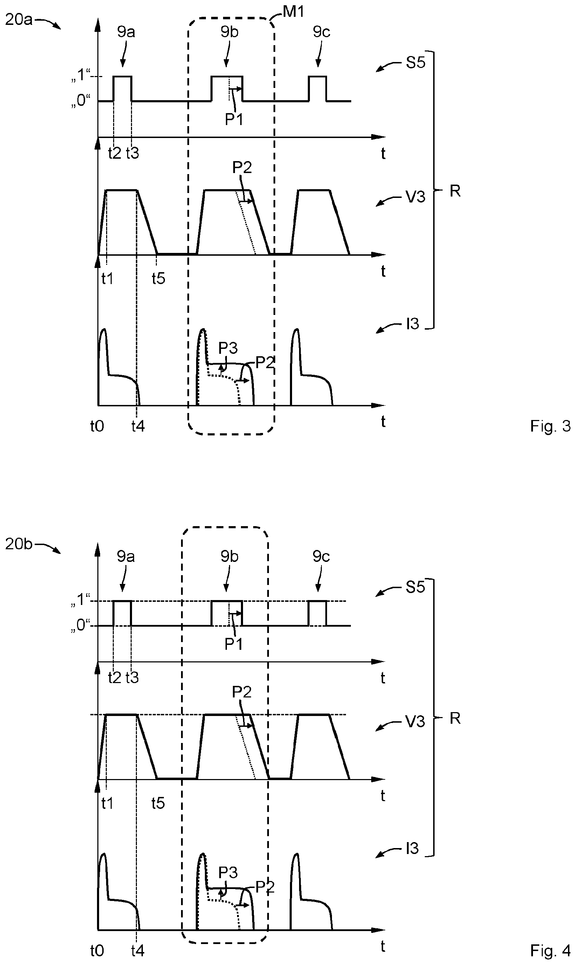

Während des Betriebs eines Fördersegments 2 werden eine Vielzahl an Fördersegmentdaten generiert und erfasst. Ein Datensatz 20a eines ersten Fördersegments 2a ist ausschnittsweise in der Figur 3 dargestellt. Die Fördersegmentdaten sind über die Zeit t aufgetragen.

Zunächst sollen die unterschiedliche Datenarten erläutert werden. Es wird im Rahmen der vorliegenden Beschreibung zwischen folgenden Datenarten unterschieden:
- Rohdaten R,
- abgeleitete Daten A,
- Datenmuster M.

Bei den Rohdaten handelt es sich um unmittelbar erfassbare Daten, die z.B. von den Sensoren erfasst werden oder durch die Steuerungen an der Busverbindung bereitgestellt werden und.

Bei den abgeleiteten Daten A handelt es sich um Daten, die nicht unmittelbar erfassbar sind, die aber den unmittelbar erfassbaren Rohdaten eines Fördersegments informationstechnisch abgeleitet werden können. So kann beispielsweise aus einer Winkelgeschwindigkeit des Phasenwinkel des Drehstromes eine Fördergeschwindigkeit einer Förderrolle berechnet werden.

Die Rohdaten und die abgeleiteten Daten werden gemeinsam auch als Fördersegmentdaten bezeichnet, da diese eine Eigenschaft oder einen Zustand beschreiben, der momentan in einem Fördersegment auftritt.

Die Datenart "Datenmuster" wird weiter unten näher erläutert.

Die Fördersegmentdaten können folgende Daten umfassen (Figur 3, 4):

### Der Sensorwerts S5 des Präsenszensors 5:

Der Wert t ="1" zeigt an, dass ein Fördergut 9 durch den Präsenszensor 5 erkannt wird (für t2<t<t3). Der Wert "0" zeigt an, dass ein Fördergut 9 durch den Präsenszensor 5 nicht erkannt wird (für t<t2 und t>t3). Der Präsenzsensor 5 deckt dabei das Fördersegment nicht zwangsläufig vollständig ab. Das Fördergut kann folglich eingangsseitig bei t<t2 schon auf dem Fördersegment angeordnet sein, auch wenn dieses noch nicht durch den Sensorwert S5 angezeigt wird. Ebenso kann das Fördergut bei t>t3 ausgangsseitig noch auf dem Fördersegment angeordnet sein, auch wenn Sensorwert S5 bereits t=t3 auf den Wert "0" umschaltet. Die Sensorwerte gehören insbesondere Datenart "Rohdaten" an, da diese unmittelbar vom Sensor bereitgestellt werden.

### Die Geschwindigkeit V3:

Der Wert V3 gibt die Geschwindigkeit einer Rolle im Fördersegment 2 an. Dies betrifft insbesondere die Geschwindigkeit der Motorrolle 3M. Der Wert V3 liegt in der Regel aber nicht zwangsläufig als expliziter Geschwindigkeitswert vor, der beispielsweise durch einen Geschwindigkeitssensor ermittelt wird. So ist die Geschwindigkeit ein Beispiel eines abgeleiteter Datenwerts, der von der Winkelgeschwindigkeit der Phasenwinkel des Drehstromes, mit dem der Drehstrommotor der Motorrolle angetrieben wird, rechnerisch ermittelt wird. Diese Winkelgeschwindigkeit selbst ist wiederum ein Datenwert der Datenart Rohdaten und kann üblicherweise über den Frequenzumrichter des Drehstrommotors abgerufen werden.

### Die Stromstärke I3:

Der Wert I3 gibt die Stromstärke des Stromes an, mit dem die motorbetriebene Förderrolle 3M angetrieben wird. Die Stromstärke I3 steht dabei in direktem Zusammenhang mit der Leistungsaufnahme der motorbetriebenen Förderrolle 3M. Die Stromstärke wird unmittelbar von dem Frequenzumrichter bereitgestellt und fällt somit unter die Datenart Rohdaten.

In einer Ausgestaltung umfasst ein Datensatz 20 weitere oder andere Fördersegmentdaten.

Ein Datensatz 20x ist dabei stets einem spezifischen Fördersegment 2x zugeordnet und umfasst dabei stets Fördersegmentdaten, die während des Betriebs des zugehörigen Fördersegments anfallen, insbesondere generiert werden oder erfasst werden.

Anhand der Figur 3 wird ein üblicher Förderzyklus des Fördersegments 2a dargestellt. In einem solchen Betriebszyklus wird genau ein Fördergut 9 gefördert. Der Förderzyklus wiederholt sich folglich immer wieder dann, wenn ein weiteres Fördergut gefördert werden soll. Zum Zeitpunkt t<t0 ist das Fördersegment im Stillstand und die Förderrollen 3 drehen sich nicht. Von der Zonensteuerung eines stromaufwärtigen Fördersegments (nicht dargestellt) wird die Übergabe des ersten Förderguts 9a angekündigt. Die Zonensteuerung 11 des vorliegenden Fördersegments startet zum Zeitpunkt t=t0 nun die Förderrollen des Fördersegments durch ein entsprechendes Steuersignal. Die Stromstärke I3 schnellt auf einen Maximalwert und beschleunigt die Förderrollen 3, die zum Zeitpunkt t=t1 ihre Arbeitsgeschwindigkeit erreichen.

Zum Zeitpunkt t=t2 wird das Fördergut auf dem Fördersegment durch den Präsenzsensor erkannt.

Aufgrund des Sensorsignals des Präsenzsensors 5 wird zum Zeitpunkt t=t3 erkannt, wann eine hintere Kante des Förderguts 9a den Überwachungsbereich des Präsenzsensors 5 verlassen hat. Anhand der Rollengeschwindigkeit V3 kann nun ermittelt werden, wann das Fördergut 9a das Fördersegment 2a verlassen hat. Dementsprechend kann zum Zeitpunkt t4 nun die Antriebsleistung für die Motorrolle 3M abgeschaltet werden. Die Förderrollen 3 laufen aus und sind zum Zeitpunkt t=t5 im Stillstand.

Der vorgenannte Förderzyklus wiederholt sich dem Grunde nach jedes Mal, wenn ein weiteres z.B. ein zweites und drittes Fördergut 9b, 9c und so weiter auf demselben Fördersegment 2a gefördert wird. Die erfassten Fördersegmentdaten können sich dann dem Grunde nach ähneln. Die oben bezeichneten Zeitpunkte t0..t5 bezeichnen dabei Ereignisse innerhalb eines Förderzyklus, die in jedem Förderzyklus erneut auftreten können. Die Zeitpunkte t0..t5 und die damit bezeichneten Ereignisse treten somit in jedem regulären Förderzyklus erneut auf.

Zur Veranschaulichung sind die Verläufe der Fördersegmentdaten bei der Förderung des zweiten und des dritten Förderguts 9b und 9c aus Figur 2 im Diagramm der Figur 3 eingezeichnet. Abweichungen in dem Verlauf der Fördersegmentdaten können sich insbesondere aufgrund der Beschaffenheit des jeweiligen Förderguts 9 ergeben.

So ist beispielsweise das zweite Fördergut 9b deutlich größer und schwerer als das erste Fördergut 9a ausgebildet (siehe Figur 2). Die erhöhte Größe des zweiten Förderguts 9b bedingt unmittelbar ein längeres Verbleiben des zweiten Förderguts 9b im Überwachungsbereich des Präsenzsensors 5, was in Figur 3 durch den Pfeil P1 bei dem Sensorwert S5 dargestellt ist. Da die Fördersegmentdaten für die Förderung des zweiten Förderguts von denen des ersten und des dritten Förderguts 9a, 9c abweichen, werden diese im Folgenden als erstes Datenmuster M1 bezeichnet.

Entsprechend werden auch die Förderrollen 3 des ersten Fördersegments 2a entsprechend länger betrieben, um das zweite Fördergut 9b vollständig von dem ersten Fördersegment 2a wegzufördern. Dies ist durch die Pfeile P2 bei den Werten für die Motorstromstäke I3 und der Geschwindigkeit V3 dargestellt.

Das erhöhte Gewicht des zweiten Förderguts 9b bedingt zudem eine erhöhte Leistungsaufnahme der motorbetriebenen Förderrolle 3M. Nach dem Beschleunigen der Förderrollen und der Übernahme des Förderguts durch das erste Fördersegment 2a wird daher die motorbetriebene Förderrolle 3M mit einer erhöhten Leistung betrieben. Dies ist in der Figur 3 durch den Pfeil P3 beim Wert für den Motorstrom I3 dargestellt.

In einem Idealzustand werden die Fördersegmentdaten, die im ersten Fördersegment 2a erfasst werden, nun auch im zweiten Fördersegment gleichermaßen erfasst. Figur 4 zeigt analog zur Figur 3 die im zweiten Fördersegment 2b erfassten Fördersegmentdaten. Im Wesentlichen ergibt sich ein gleiches Datenbild, wobei die Fördersegmentdaten einer absoluten Zeitskala natürlich später erfasst werden. Die Zuordnung der Fördersegmentdaten zu dem jeweiligen Fördergut 9a-c bleibt aber gegeben.

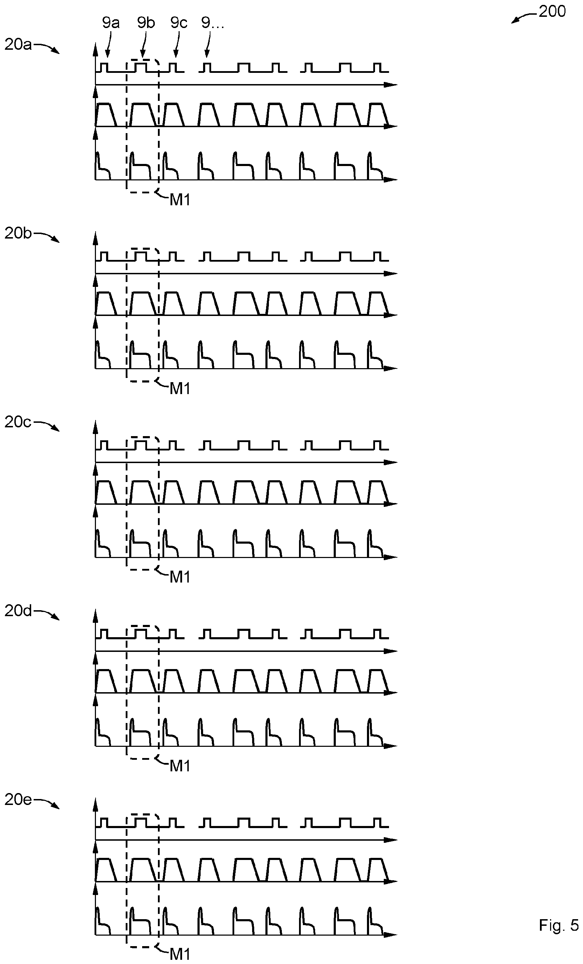

Figur 5 zeigt eine Datensammlung 200, umfassend die Datensätze 20a..20e der Fördersegmente 2a..e, die während der Förderung der Fördergüter 9a..c und weiterer Fördergüter erfasst wurden.

Eine Datensammlung 200 umfasst somit generell die Datensätze 20a... n mehrerer Fördersegmente, insbesondere die Datensätze aller Fördersegmente 2 der Förderanordnung 1.

Zu erkennen ist, dass das spezifische Datenmuster M1, das aufgrund der Förderung des Förderguts 9b im Datensatz 20a des ersten Fördersegment 2a erscheint, nun ebenfalls in den Datensätzen 20b..e aller weiterer Fördersegmente 2b..2e erscheint.

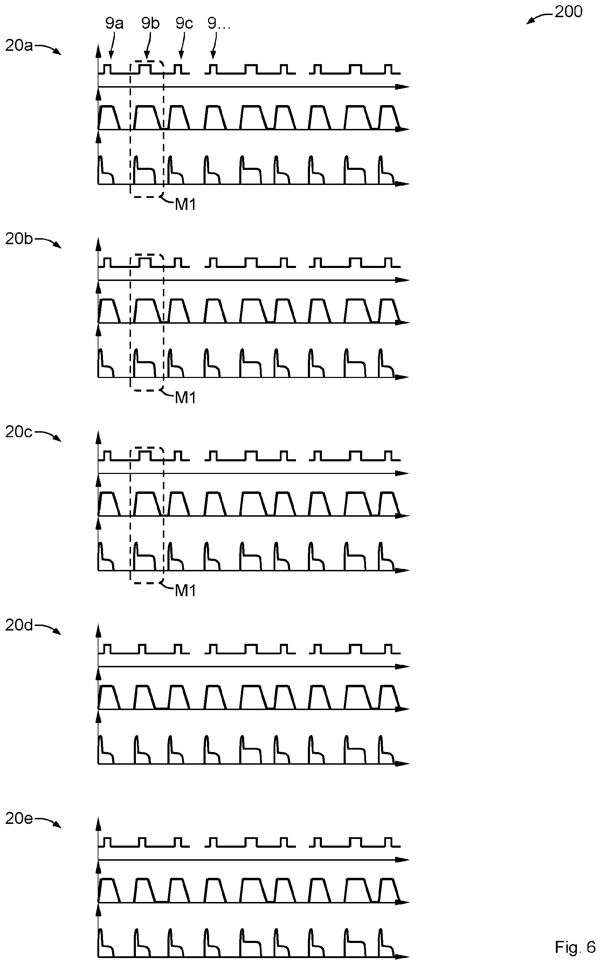

Figur 6 zeigt eine Datensammlung 200, die weitgehend der Datensammlung aus Figur 5 entspricht. Abweichend ist nun, dass das Muster M1 in den Datensätzen 20a..c der ersten drei Fördersegmente 2a..c erscheint, nicht aber in den Datensätzen 20d, 20e der vierten und fünften Fördersegment 2.

Dies ist ein Hinweis auf eine Abnormalität. Die Ursache kann hier vielschichtig sein. Eine mögliche Ursache kann darin liegen, dass es sich bei dem Fördergut, dass in der vierten und fünften Fördersegment erfasst wurde, nicht das zweite Fördergut 9b ist, das in den ersten drei Fördersegmenten erfasst wurde. Beispielsweise kann hier unerlaubter manueller Eingriff in den Fördervorgang stattgefunden haben, bei dem das Fördergut 9 ausgetauscht wurde. Die Abnormalität bezieht sich somit auf das Fördergut (fördergutbezogene Abnormalität).

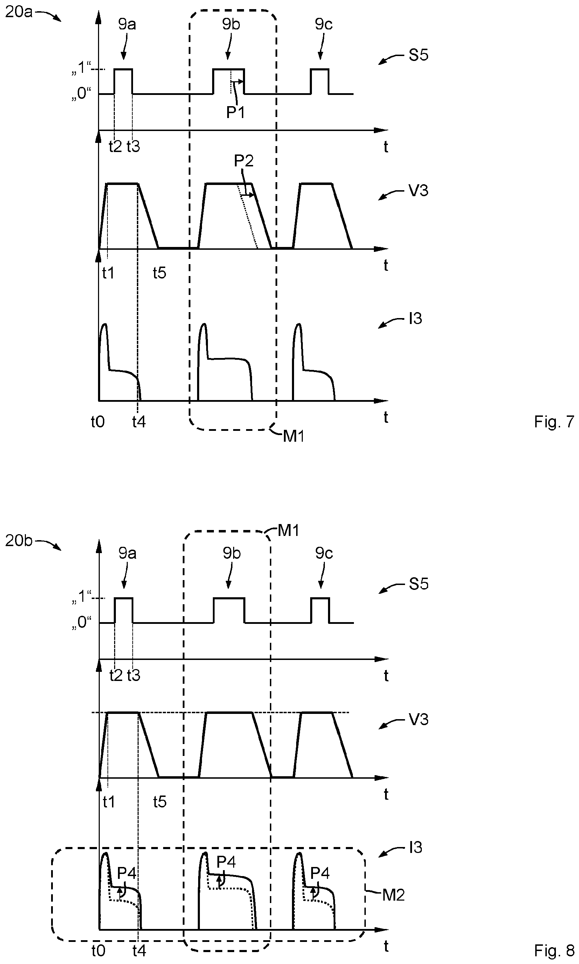

Die Figuren 7 und 8 zeigen analog zu den Figuren 3 und 4 die Datensätze, die bei der Förderung der Fördergüter 9a..c entlang der ersten beiden Fördersegmenten 2a, 2b erfasst werden. Hier wäre zu erwarten, dass sich die Datensätze sehr ähneln, da identische Fördergüter von gleichartiger Hardware gefördert und erfasst werden.

Beispielhaft unterscheiden sich nun die Werte für den Motorstrom I3 im Datensatz 2b des zweiten Fördersegments 2b signifikant von den Werten im ersten Datensatz 20a des ersten Fördersegments 2a. Die Stromstärke I3 ist im zweiten Fördersegment 2b dabei für sämtliche Förderzyklen aller Fördergüter 9a..9c größer in den entsprechenden Förderzyklen des ersten Datensatzes 20a des ersten Fördersegments 2a. Diese Abweichung ist in der Figur 8 durch die Pfeile P4 dargestellt. Die entsprechenden Fördersegmentdaten werden hierbei nachfolgend durch ein zweites Datenmuster M2 charakterisiert.

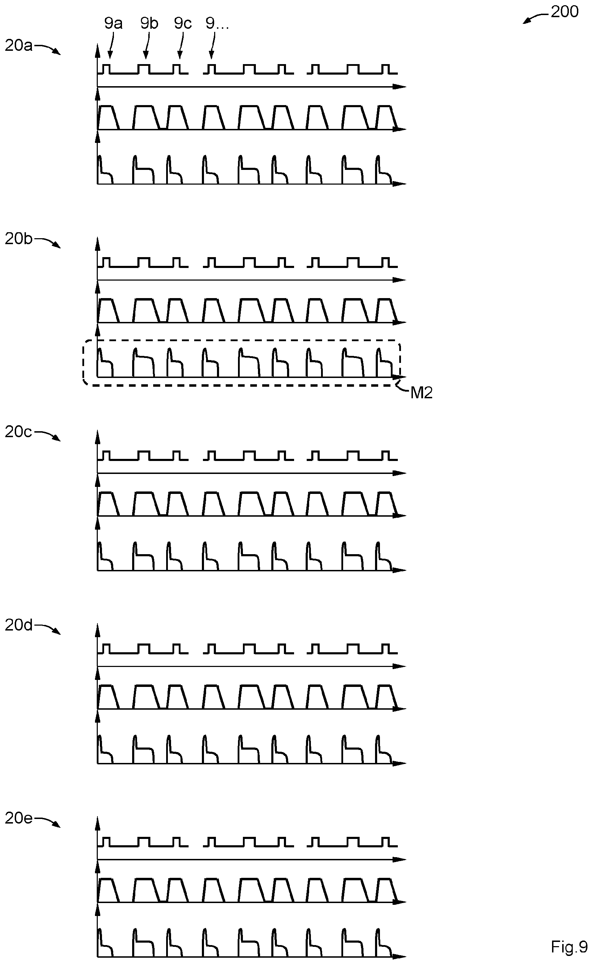

Figur 9 zeigt die Datensammlung 200 analog zu Figur 6. Hier erscheint das zweite Datenmuster M2 nur in dem zweiten Datensatz 20b des zweiten Fördersegments 2b. Da die übrigen Datensätze 20a, 20c..e dieses zweite Datenmuster M2 nicht aufweisen deutet dies auf strukturelle Besonderheiten im zweiten Fördersegment 2b hin. Eine mögliche Ursache könnte ein Defekt an einer der Förderrollen 3 des zweiten Fördersegments 2b sein. So kann beispielsweise ein Gegenstand sich zwischen der Förderrolle 3 und dem Stützrahmen 8 verklemmt haben, was eine bremsenden Wirkung auf die Rollen ausübt. Die motorbetriebene Förderrolle muss folglich mehr Leistung aufbringen. Die Abnormalität bezieht sich somit auf ein einzelnes Fördersegment (fördersegmentbezogene Abnormalität).

Zur Generierung von Datenmustern können gezielt mehrere Fördersegmente zeitlich koordiniert einen Datenmustergenerierungsmodus überführt werden. In diesem Modus vollzieht die Fördersegmente Aktionen, die aus fördertechnischer Sicht keinen Sinn erfüllen. So kann anhand einer kurzfristigen Beschleunigung einer motorbetriebenen Förderrolle ein Antwortverhalten des Förderguts provoziert werden, aus dem sich ein Datenmuster ableiten lässt. Die zeitliche Koordinierung ist insbesondere derart auszuführen, dass die Aktion immer dann ausgeführt wird, wenn ein identisches Fördergut an dem jeweiligen Fördersegment anwesend ist, um so z.B. ein fördergutspezifisches Datenmuster zu generieren. Zur Erzeugung von fördersegmentspezifischen Datenmuster kann die selbe Vorgehensweise sinnvoll sein, da aufgrund des identischen Förderguts über mehrere Fördersegmente identische Bedingungen bei der Generierung der Daten vorhanden sind.

Die Identifizierung der Datenmuster anhand der Fördersegmentdaten erfolgt in einer Ausgestaltung unter Berücksichtigung von gerätespezifischen Metadaten. Die gerätespezifischen Metadaten umfassen dabei statische Parameter der zugrundeliegenden Geräte. So können die motorbetriebenen Förderrollen z.B. unterschiedliche Leistungsstufen aufweisen, so dass sich die motorbetrieben Förderrollen in deren Ansprechverhalten voneinander unterscheiden, auch wenn die Fördersituation ansonsten identisch ist. Die Berücksichtigung kann beispielsweise wie folgt erfolgen:
In einer Möglichkeit werden die unterschiedlichen Geräteparameter rechnerisch kompensiert, wobei die abweichenden Fördersegmentdaten der zueinander abweichenden Geräte eine Vergleichbarkeit erhalten. Dieser Kompensation können die Fördersegmentdaten oder daraus generierte Datenmuster selbst verwendet werden, insbesondere in Form von Kompensationsmustern.

In einer anderen Möglichkeit werden Datenmuster nur anhand von Fördersegmentdaten erzeugt, die auf Basis gleichartiger Hardware generiert wurde.

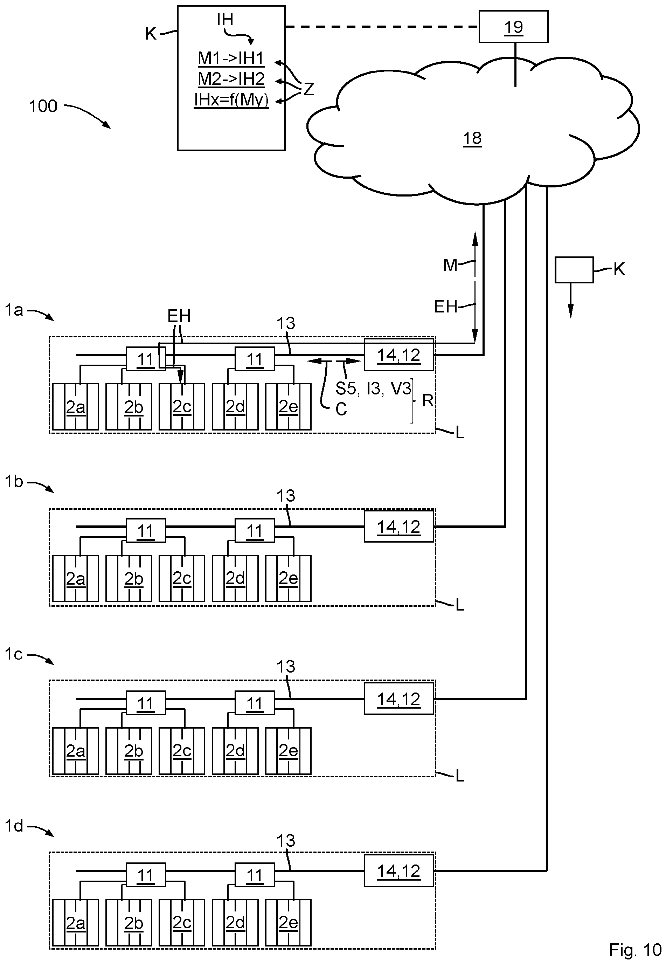

Figur 10 zeigt ein Fördernetzwerk 100. Das Fördernetzwerk 100 umfasst eine Vielzahl an Förderanordnungen 1a..d, wie in Figur 2 dargestellt. Die Förderanordnungen 1a..d sind insbesondere an weit entfernten Orten vorgesehen, gehören also nicht zu einer gemeinsamen Fertigungsstätte. Die Standorte der Förderanordnungen 1a..d zueinander sind somit zumindest 5km insbesondere zumindest 10km voneinander entfernt.

Die Anlagensteuerungen 12 der jeweiligen Förderanordnungen 1a..d sind über eine Datenfernverbindung 18 miteinander verbunden. Die Datenfernverbindung 18 ist aufgrund der entfernten Standorten zueinander internetbasiert, wobei der Datenaustausch Datenfernverbindung 18 mittels einer gesicherten Internetverbindung, insbesondere via VPN gesichert, erfolgen kann. Die Standorte der Förderanordnungen 1a..d sind nicht über ein lokales Datennetzwerk LAN miteinander verbunden.

Die Daten S5, I3, V3 (im folgenden auch Rohdaten R) der in den Fördersegmenten 2a..e erzeugten Datensätze 20a..e bzw. die Datensätze 20a..e selbst werden in einer lokalen oder internen Auswerteeinheit 14 gesammelt. Bei der lokalen bzw. internen Auswerteeinheit 14 kann es sich um die Anlagensteuerung 12 selbst handeln. Die Rohdaten R umfassen dabei auch Steuerungsdaten C, die von den internen Steuerungen 11, 12 zu den Komponenten der Fördersegmenten ausgegeben werden. Die Steuerungsdaten C können ergänzend zu den Darstellungen der Figuren 3 bis 9 auch Bestandteil der Datensätze bzw. Datensammlung sein.

Die Datensätze 20 umfassend die Rohdaten R und umfassen sehr große Datenmengen. Die Datensätze werden in Ihrem vollem Umfang daher nur in einem lokalen Bereich L vertrieben und gespeichert, in dem ein unternehmenseigenes Datennetzwerk große Datenmengen verwalten kann. Durch die Auswerteeinheit 14 erfolgt nun eine Aufbereitung der Rohdaten. So kann die interne Auswerteeinheit 14 aus den Rohdaten R die Datenmuster M1, M2 erkennen, die anhand der vorigen Figuren vorgestellt wurden. Solche Datenmuster M1, M2 können nun vergleichsweise datenarm über die Datenfernverbindung 18 an eine zentrale Auswerteeinheit 19 übermittelt werden.

Die Begriffe lokal und intern können dabei synonym verstanden werden.

Die Begriffe intern und extern beziehen sich dabei auf die Zugehörigkeit (intern) oder Nichtzugehörigkeit (extern) zu einer der Förderanordnungen 1a..e.

Die Musteridentifizierung kann alternativ oder zusätzlich auf der Zonensteuerung 11 stattfinden. Insbesondere findet in der Zonensteuerung 11 die Erzeugung von abgeleiteten Daten A statt, die durch die Rohdaten erzeugt werden.

Die zentrale Auswerteeinheit 19 ist insbesondere eine externe Auswerteeinheit.

Die zentrale Auswerteeinheit 19 kann die Datenmuster M1, M2 nun für Zwecke der vorausschauende Instandhaltung (predictive maintanance) nutzen und ggf. Kundendienstmaßnahmen veranlassen. Bei der Übertragung eines erkannten Datenmusters an die zentrale Auswerteeinheit 19 kann dabei eine konkrete Hardwarekomponenten der Förderanordnung verknüpft sein, so dass die Instandhaltungsmaßnahme zielgerichtet durchgeführt werden kann.

Die vorliegenden Erfindung beschränkt sich allerdings nicht auf Themen der vorausschauenden Instandhaltung, die abstrakt betrachtet bereits in anderen Technologiefeldern angewendet wird (z.B. bei Aufzügen, Automobilen, Flugzeugen). Vielmehr lassen die Erkenntnisse, die aus den anfallenden Daten anfallen, unmittelbar im laufenden Förderbetrieb nutzen.

So kann beispielsweise eine Handlungsanweisung EH von der zentralen Auswerteeinheit 19 an eine Förderanordnung 1a erzeugt werden, die dann von der jeweiligen Förderanordnung 1a umgesetzt wird. Eine solche Handlungsanweisung, die von der zentralen Auswerteeinheit 19 als Folge einer aktuellen Datenübermittlung erlassen wird, wird im Folgenden als externe Handlungsanweisung EH bezeichnet. Eine solche Handlungsanweisung kann in Abhängigkeit eines oder mehrerer erkannter Datenmuster M1, M2 ausgegeben werden. Eine solche externe Handlungsanweisung EH, die von der zentralen Auswerteeinheit 19 stammt, ist dabei vorzugsweise definiert einem Fördersegment 1a und/oder einer konkreten Hardwarekomponente in diesem Fördersegment z.B. einer Förderrolle 3M im Fördersegment 2c zugeordnet. Insbesondere greift dabei die Auswerteeinheit 19 nicht unmittelbar auf die entsprechende Hardwarekomponente und/oder auf die Rohdaten zu; vielmehr kann anhand der externen Handlungsanweisung EH die zugehörige Zonensteuerung 11 und/oder die Anlagensteuerung 12 angewiesen werden, die Hardwarekomponente in einer durch die Handlungsanweisung definierten Art und Weise anzusteuern.

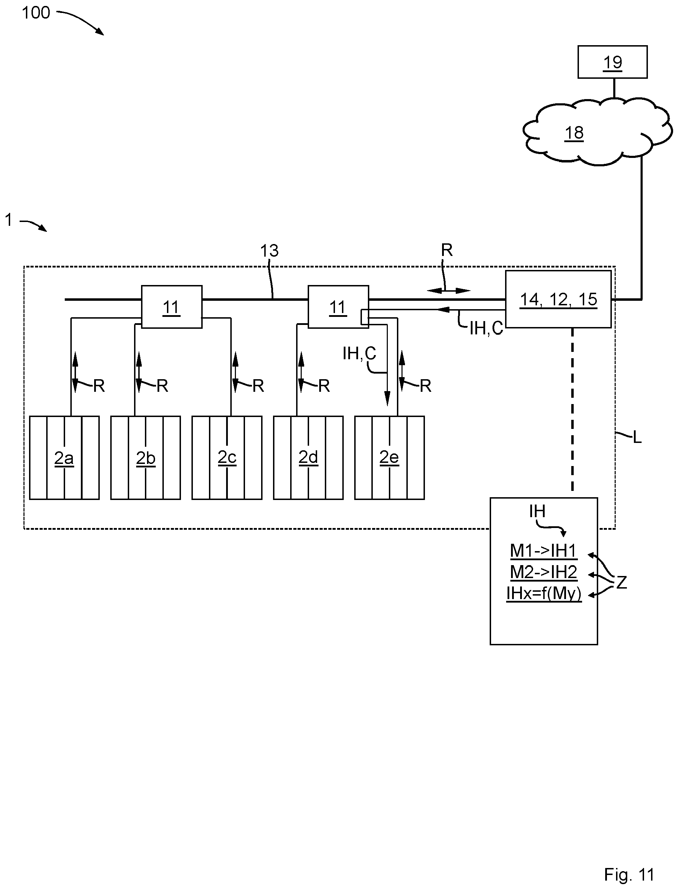

Im Gegensatz dazu stehen internen Handlungsanweisungen IH, die anhand der Figur 11 beschrieben werden. Interne Handlungsanweisungen IH werden von einer internen Steuerung 11, 12 ausgegeben, die Bestandteil einer Förderanordnung 1 ist. Die interne Handlungsanweisung IH wird anlassbezogen ausgegeben, insbesondere nach Erkennung eines spezifischen Datenmusters M1, M2.

Die Handlungsanweisung IH, EH sind insbesondere spezielle Steuerbefehle C oder können durch die internen Steuerungen in Steuerbefehle umgesetzt werden.

Als interne Steuerung einer Förderanordnung wird eine solche Steuerung verstanden, die lokaler Bestandteil der Förderanordnung 1 ist, also nicht über eine Datenfernverbindung 18 an die Förderanordnung 1 angeschlossen sind. Eine interne Steuerung ist insbesondere die Zonensteuerung 11 oder die Anlagensteuerung 12. Die zentrale Auswerteeinheit 19 ist insbesondere keine interne Steuerung.

Die interne Steuerung, hier beispielhaft die Anlagensteuerung 12, hat Zugriff auf eine Zuordnungstabelle Z. Die Zuordnungstabelle Z umfasst Zuordnungsvorschriften darüber, welche Handlungsanweisung IH1, IH2 mit dem Auftreten von welchem Datenmuster M1, M2 verknüpft ist. Wird in den Rohdaten R das Auftreten eines Datenmusters M2 erkannt, so wird basierend auf der Zuordnungsvorschrift die Handlungsanweisung IH2 z.B. für das Fördersegment 2e ausgegeben.

Die Zuordnungsvorschriften sind dabei nicht auf einzelne Fördersegmente beschränkt. So kann eine Zuordnungsvorschrift insbesondere derart lauten, dass bei Erkennung eines Datenmusters anhand von Rohdaten an den stromaufwärtigen Fördersegmenten eine Handlungsanweisung ausgegeben wird, die für ein stromabwärtiges fünftes Fördersegment bestimmt ist. Hiermit kann insbesondere ein aktiver Eingriff in das aktuelle Fördergeschehen vorgenommen werden, was insbesondere bei der Ermittlung von fördergutspezifischen Datenmustern relevant ist. Sofern also an mehreren stromaufwärtigen Fördersegmenten ein fördergutspezifisches Datenmuster M2 ermittelt wird, kann ein stromabwärtiges Fördersegment, an dem das betreffende Fördergut noch nicht angekommen ist oder zumindest nicht vollständig durchgefördert ist, mit einer Handlungsanweisung IH versehen werden, die die Besonderheiten des betreffenden Förderguts berücksichtigt.

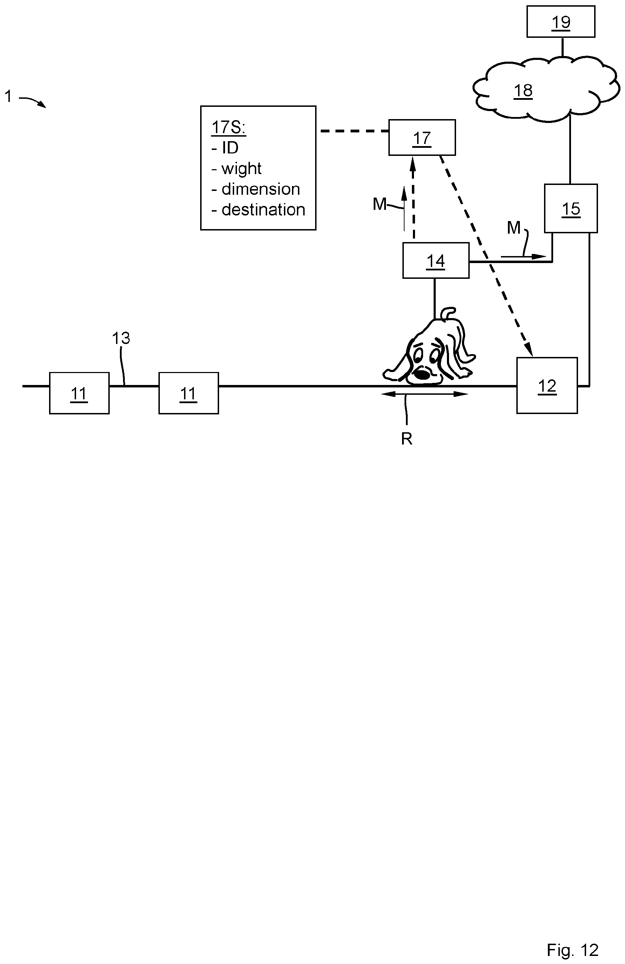

Die Auswerteeinheit 14 kann integral mit der Anlagensteuerung 12 ausgebildet sein, wie Figur 11 zeigt. Alternativ kann die Auswerteeinheit 14 separat zur Anlagensteuerung 12 ausgebildet sein, wie in Figur 12a gezeigt ist (die Fördersegmente sind hier nicht dargestellt). Die Auswerteeinheit ist insbesondere als sog. "Sniffer" ausgebildet und belauscht ("schnüffelt") die Kommunikation zwischen der Zonensteuerung 11 und der Anlagensteuerung 12, ohne diese Kommunikation zu beeinflussen. Hierbei ist bedeutsam, dass die lokale bzw. interne Auswerteeinheit 14 Zugriff auf die in mehreren Fördersegmenten 2a..e anfallenden Rohdaten R hat, insbesondere die Rohdaten R aller Fördersegmente in einer Förderanordnung, sowie optional Zugriff zu Steuerungsdaten C, die von der Anlagensteuerung 12 und/oder der Zonensteuerung 11 an die Aktuatoren der Fördersegmente 2 gesendet werden.

Zwischen der Anlagensteuerung 12 und der Auswerteeinheit 14 einerseits und der Datenfernverbindung 18 andererseits kann ein Gateway 15 vorgesehen sein. Das Gateway ist insbesondere Bestandteil der Förderanordnung 1, der auch die Anlagensteuerung 12 bzw. die Auswerteeinheit 14 angehören. Das Gateway kann integral mit der Anlagensteuerung, mit der Auswerteeinheit 14 ausgebildet sein.

Die Anlagensteuerung 12 hat Zugriff auf eine Fördergutdatenbank 17. In der Fördergutdatenbank sind zu den zu fördernden Fördergütern 9 jeweils fördergutindividuelle Fördergutdatensätze 17S abgelegt. Ein Fördergutdatensatz 17S spezifiziert das Fördergut hinsichtlich deren Identifikation (z.B. Sendungsnummer eine Postdienstleisters), Gewicht, äußere Dimensionen (Länge, Breite Höhe) und Ziel des Förderguts. So ist beispielsweise die Angabe über das Ziel ein wichtiger Bestandteil bei der Anlagensteuerung, da basierend darauf der Pfad des Förderguts an Sortierstellen eingestellt wird.

Ein Fördergutdatensatz wird in der Regel von extern bereitgestellt, beispielsweise von einem Postdienstleister und enthält unter anderem Daten, die nicht durch die Rohdaten eines Fördersegments erzeugbar sind. So können die Rohdaten insbesondere nicht geeignet sein, das Ziel des Förderguts zu ermitteln.

Der Fördergutdatensatz 17S kann nun anhand der Rohdaten R, anhand der abgeleiteten Daten A oder anhand der Datenmuster M ergänzt. Werden. Lassen sich die Daten beispielsweise derart interpretieren, dass das Fördergut eine bestimmte Länge aufweist, so kann dies in den Fördergutdatensatz 17S geschrieben werden oder eine dort vorliegende falsche Information ersetzt werden.

Wie zuvor ausgeführt kann aufgrund eines förderspezifischen Datenmusters auf die aktuelle Länge des Förderguts in Förderrichtung betrachtet geschlossen werden. Aber ein Fördergut ist in der Regel nicht quadratisch oder kugelrund ausgebildet, meist sind Fördergüter unregelmäßig quaderförmig ausgebildet. Mit der Erkenntnis, welche Erstreckung des Fördergut in Förderrichtung aufweist, kann anhand des jeweils fördergutindividuellen Fördergutdatensatzes auf die Drehstellung des Förderguts geschlossen werden. Eine solche Drehstellung kann wiederum in den fördergutindividuelles Fördergutdatensatz geschrieben werden, so dass diese Information auch für andere Fördersegmente derselben Förderanordnung nutzbar ist.

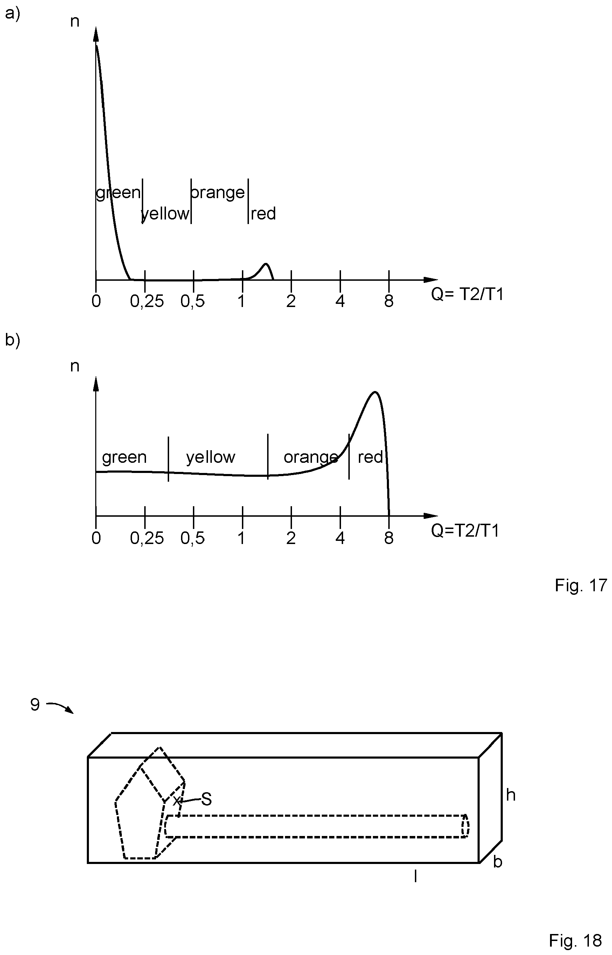

Figur 18 zeigt ein Beispiel eines besonderen Förderguts. Ein längliches Paket weist eine Länge I auf, die um ein vielfaches größer ist als die Höhe h und die Breite b. Zudem ist ein Schwerpunkt S in hohem Maße exzentrisch angeordnet. Ein solches Fördergut kann ein signifikant anderes Kippverhalten aufweisen als die meisten anderen Fördergüter auf, was sich in einigen Sortiervorrichtung als nachteilig herausstellen kann. Durch eine vorteilhafte Drehstellung, z.B. Schwerpunkt voraus, kann eine ordnungsgemäße Förderung sichergestellt werden.

Die zentrale Auswerteeinheit 19 kann einen Katalog K von internen Handlungsanweisungen IH sowie von solchen Zuordnungsvorschriften Z verwalten (Figur 10). Dieser Katalog K mit internen Handlungsanweisungen kann nun von der zentralen Auswerteeinheit 19 an die Förderanordnungen 1a.. 1e zur Verfügung gestellt werden. Die zentrale Auswerteeinheit 19 kann den Katalog stetig erweitern, da die zentrale Auswerteeinheit 19 über die Datenmuster zumindest mittelbar auf die Fördersegmentdaten von den Fördersegmenten von sehr vielen Förderanordnungen zurückgreifen kann.

So ist es möglich, durch stetige Analyse der Daten bzw. Datenmuster neue Handlungsanweisungen und entsprechende Zuordnungsvorschriften zu generieren den Katalog damit zu erweitern. Diese Erweiterungen werden den Förderanordnungen zur Verfügung gestellt, so dass die internen Steuerungen 11, 12 Zugriff auf die entsprechenden Handlungsanweisungen IH sowie von solchen Zuordnungsvorschriften erhalten.

In einer Ausgestaltung wird die Verarbeitung der Rohdaten R und Muster M im Netzwerk auf zumindest drei Einheiten 11, 14, 19 aufgeteilt. Die Zonensteuerungen 11 verarbeiten die Rohdaten R und können daraus bereits Muster erzeugen oder basierend auf Mustern Handlungsanweisungen umsetzen. Die Zonensteuerungen sind dabei ausgelegt, Verarbeitungen innerhalb einer ersten Reaktionszeit auszuführen.

Die lokalen bzw. internen Auswerteeinheiten 14 können ebenfalls Rohdaten R verarbeiten und Muster erzeigen erzeugen oder basierend auf Mustern Handlungsanweisungen umsetzen. Diese Auswerteeinheiten 14 sind dabei ausgelegt, Verarbeitungen innerhalb einer zweiten Reaktionszeit auszuführen. Nach Verarbeitung der Rohdaten zu Datenmustern können die Rohdaten auch gelöscht werden.

Die zentrale Auswerteeinheit 19 kann Datenmuster bearbeiten und basierend auf Mustern Handlungsanweisungen. Die zentrale Auswerteeinheit 19 ist dabei ausgelegt, Verarbeitungen innerhalb einer dritten Reaktionszeit auszuführen.

Die erste Reaktionszeit ist dabei kürzer als die zweite Reaktionszeit und die zweite Reaktionszeit ist dabei kürzer als die dritte Reaktionszeit.

Im Gegensatz zu der abfallenden Reaktionsgeschwindigkeit, je weiter die Einheiten vom Förderprozess entfernt sind, steigt die Datenkapazität an, je weiter die rechnende Einheit vom Prozess entfernt ist. So verfügt die zentrale Auswerteeinheit 19 über die größten Datenspeicherkapazitäten, während die Zonensteuerung 11 über die geringsten Datenspeicherkapazitäten verfügt.

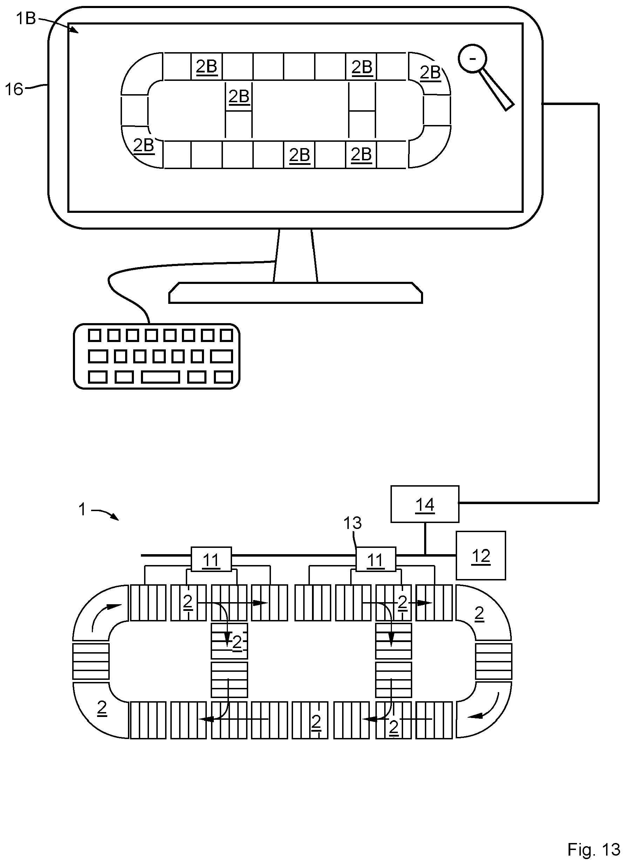

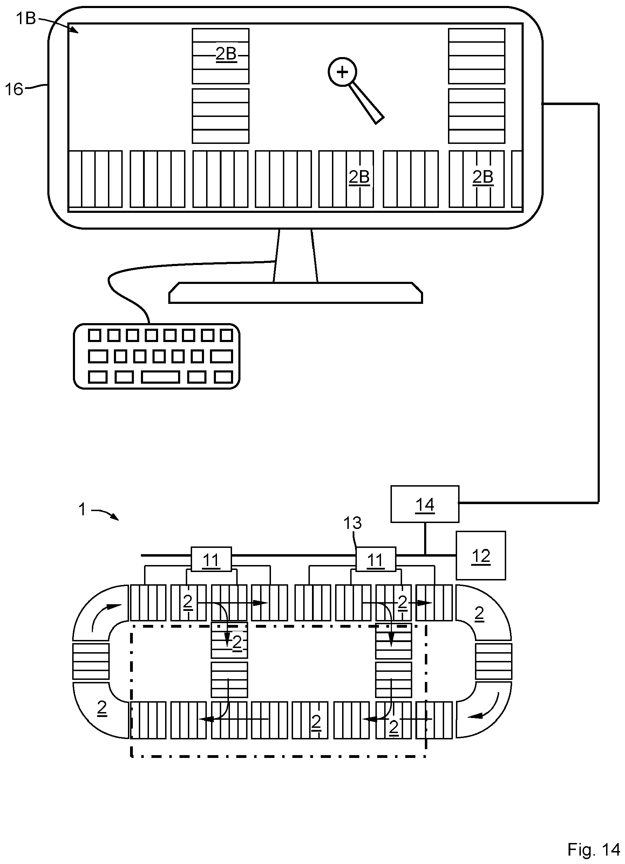

Die Figuren 13 und 14 zeigen die Förderanordnung 1 nach den vorherigen Figuren. Ergänzend sind hierbei weitere Fördersegmente eingezeichnet. So sind zusätzlich zu den geradlinigen Fördersegmenten aus den vorherigen Figuren nun auch andersartige Fördersegmente 2 dargestellt, wie z.B. Transferstellen und Kurven. Die Wege, entlang denen ein Fördergut gefördert wird, sind durch die Pfeile dargestellt. Auf die Art der Fördersegmente kommt es im Rahmen der nachfolgenden Beschreibung aber nicht an. Es stellvertretend für alle Fördersegmente nur vereinzelte Fördersegmente mit dem Bezugszeichen 2 versehen.

Über die Auswerteeinheit 14 wird die Kommunikation auf der Busverbindung 13 abgehört und ausgewertet. Auswerteergebnisse werden nun auf einer Anzeigevorrichtung 16 in Form eines Bildschirms graphisch wiedergegeben. Hierzu wird an der Anzeigevorrichtung 16 ein Abbild 1B der Förderanordnung 1 dargestellt. Das Abbild 1B der Förderanordnung umfasst dabei Abbilder 2B der Fördersegmente 2 der Förderanordnung 1. Die in der Förderanordnung 1 mit dem Bezugszeichen bezeichneten Fördersegmente sind in dem Abbild 1B jeweils durch Abbilder mit dem Bezugszeichen 2B repräsentiert.

Die Abbilder 2B der Fördersegmente stellen dabei die Fördersegmente 2 vorzugsweise in Draufsicht dar.

Die Abbilder 2B der Fördersegmente 2 sind in dem Abbild 1B so zueinander angeordnet, wie auch die realen Fördersegmente zueinander angeordnet sind. Grenzt in der realen Förderanordnung dabei ein Eingang eines zweiten Fördersegments an den Ausgang eines ersten Fördersegments an, so ist diese Relation auch in dem Abbild 1B gegeben.

Das Abbild 1B kann anhand eines Planungswerkzeug erstellt werden. Ein solches Planungswerkzeug ist beispielsweise eine Softwareanwendung, mit der aus den Datenmodellen von Einzelkomponenten eine Förderanordnung zusammengestellt werden kann, ähnlich bei der Konfiguration eines Neuwagens auf der Homepage des Herstellers. Aus einem bei der initialen Planung der Förderanordnung erzeugten Datenmodell kann das hier angewendete Abbild 1B erzeugt werden.

Hier kann sich ein Betriebsleiter (stellvertretend für jede andere Person, die sich für den Zustand der Förderanordnung interessiert) über die Funktion und den Zustand der Förderanordnung 1 informieren. Die Rohdaten werden dabei aufbereitet angezeigt, so dass der Betriebsleiter sich über visuelle Eindrücke mit wesentlichen Information aus der Förderanordnung versorgen kann.

Zunächst kann der Betriebsleiter anhand einer Zoomfunktion die Darstellung auf einen bestimmten Maßstab einstellen. Figur 13 zeigt in der Anzeigevorrichtung 14 ein Abbild 1B der Förderanordnung in einem kleineren Maßstab; Figur 14 zeigt in der Anzeigevorrichtung 14 ein Abbild 1B der Förderanordnung in einem größerem Maßstab.

Ein Detaillierungsgrad des Abbildes variiert dabei in Abhängigkeit des Maßstabs. So können mit einem größerem Maßstab pro Fördersegment mehr Details dargestellt werden als bei einem kleineren Maßstab.

Um dem Betriebsleiter auf intuitive Weise Informationen über den Zustand der Förderanlage zu vermitteln können die Rohdaten graphisch aufbereitet werden. So können die einzelnen Fördersegmente entsprechend der Rohdaten eingefärbt werden.

In den nachfolgenden Figuren werden dafür Beispiele aufgeführt, wobei die Einfärbungen entsprechend textlich illustriert sind, da in Patentzeichnungen keine Farben verwendet werden können.

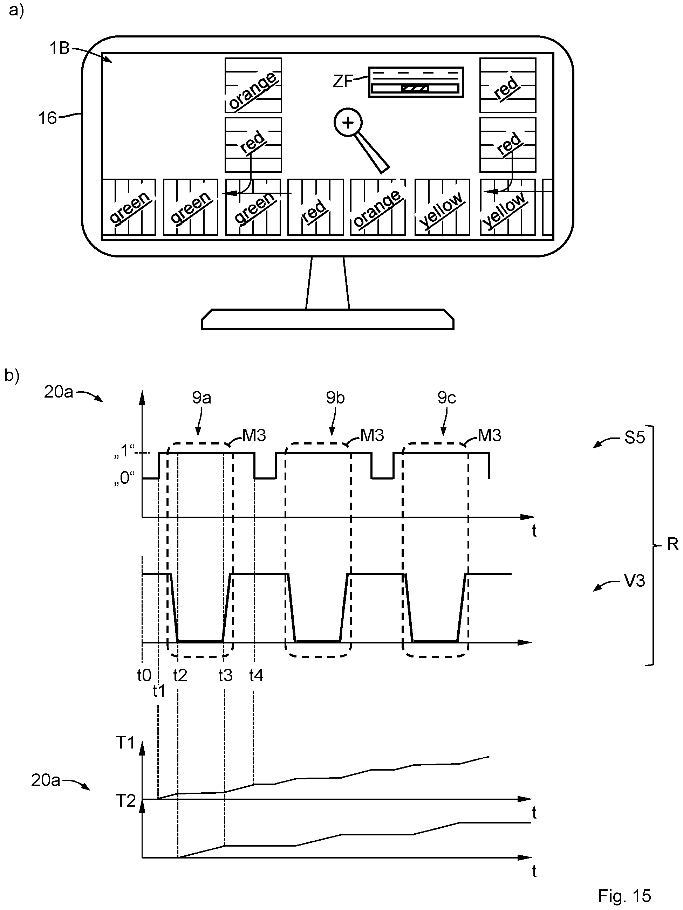

Figur 15a visualisiert einen Zustand, welcher häufig in einer Förderanordnung auftritt. Durch die zusammenführenden Pfeile wird eine Transferstelle visualisiert, an der zwei Förderpfade aufeinandertreffen und zusammengeführt werden. Hier kann es vermehrt zu Staubildungen kommen, wenn mehr Fördergüter an die Transferstelle herangeführt werden als abgeführt werden.

Die Farbcodierung gibt dabei eine Hinweis auf eine Stausituation an, ähnlich der Darstellung des Staugeschehens auf einer digitalen Straßenkarte. Ein solcher Stau an Fördergütern lässt sich durch die Rohdaten R isoliert nicht unmittelbar ablesen. Vielmehr bedarf es einer Auswertung der Rohdaten durch die Auswerteeinheit, insbesondere unter Verwendung einer Mustererkennung.

Ein Stau an Fördergütern kann insbesondere durch ein spezielles Muster der Rohdaten umfassend das Signal S5 des Präsenzsensors 5 und der Geschwindigkeit V3 einer Förderrolle 3 erkannt werden, was in Figur 15b illustriert ist. Zum Zeitpunkt t0 dreht sich die Förderrolle (V3>0) und ein erstes Fördergut 9a wird von einer vorhergehenden Fördersegment herangefördert S5= "1"). Zum Zeitpunkt t1 wird das erste Fördergut 9a vom Präsenzsensor 5 erkannt. Zum Zeitpunkt t2 ist die Fördergeschwindigkeit V3 gleich Null, obwohl das erste Fördergut a noch auf dem Fördersegment vorhanden ist und weitergefördert werden möchte. Dies kann als klarer Hinweis auf eine Stausituation gedeutet werden, da das Fördergut nun nicht an das stromabwärtige Fördersegment gefördert wird. Erst nach Ablauf einer Wartezeit zum Zeitpunkt t3 läuft das Fördersegment wieder an und das erste Fördergut 9a verlässt zum Zeitpunkt t4 den Erkennungsbereich des Präsenzsensors 5. Das entsprechende Datenmuster M3 wiederholt sich auch für die nachfolgenden Fördergüter 9b, 9c. Das dritte Datenmuster M3 wird daher im Verfahrensschritt "Spezifizieren" als fördersegmentspezifisches Datenmuster spezifiziert.

Die Einfärbung kann dabei anhand der folgenden Algorithmen erfolgen. Wie zuvor erläutert ist es für das dritte Datenmuster M3 charakteristisch, dass trotz erkanntem Fördergut auf dem Fördersegment die Fördergeschwindigkeit während eines signifikanten Zeitraums Null beträgt.

Eine erste Dauer T1 ist dabei die Summe aus den Zeiträumen, in denen ein Fördergut im Erkennungsbereich des Präsenssensors 5 ist und die Fördergeschwindigkeit V3 ungleich 0 ist. Die erste Dauer T1 setzt sich im vorliegenden Beispiel aus den Zeiträumen t1< t < t2 sowie t3<t<t4 zusammen, aufsummiert über mehrere Förderphasen von mehreren Fördergütern 9a..c.

Eine zweite Dauer T2 ist dabei die Summe aus den Zeiträumen, in denen ein Fördergut im Erkennungsbereich des Präsenssensors ist, aber die Fördergeschwindigkeit V3 gleich 0 ist.

Folglich ist ein Fördergut vorhanden, welches gefördert werden soll, es wird aber nicht gefördert. Die zweite Dauer T2 setzt sich aus den Zeiträumen t2< t < t3 zusammen, aufsummiert über mehrere Förderphasen von mehreren Fördergütern 9a..c.

Je größer nun der Anteil der zweiten Dauer T2 gegenüber der ersten Dauer T1 ist, desto niedriger ist die effektive Förderleistung an Fördergütern, die gefördert werden sollen. Der Quotient Q aus T2/T1 stellt damit ein Maß für das Stauaufkommen an dem Fördersegment dar. Dieser Quotient Q wird nun als Stauwert bezeichnet. Jedem Fördersegment kann nun ein fördersegmentspezifischer Stauwert Q zugeordnet werden.

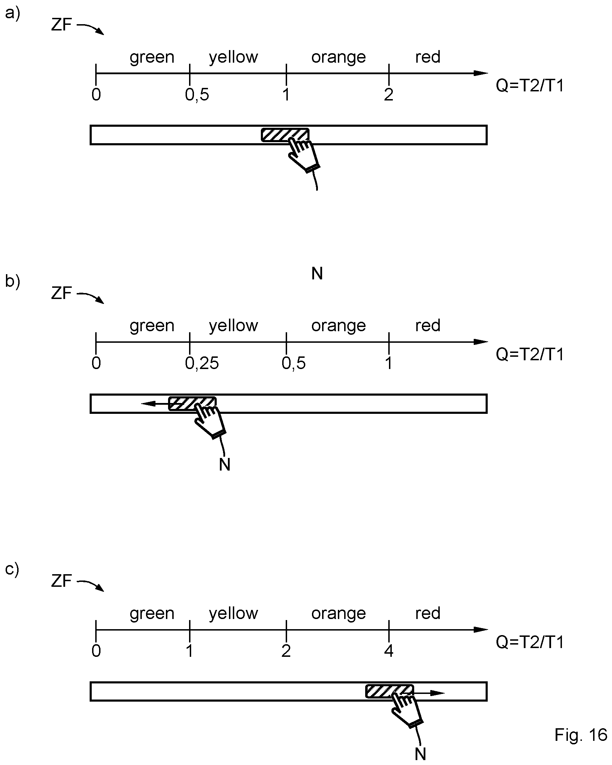

Anhand einer hinterlegten Farbzuordnung ZF (Figur 16) kann dem Stauwert Q eine Farbe zugeordnet werden, mit der das Abbild 2B des entsprechenden Fördersegments gemäß Figur 15 versehen wird, z.B. mit der Maßgabe: "Je größer der Stauwert desto roter!"

Die Farbzuordnung F liefert dabei jedem Stauwert Q eine entsprechende Farbe. Nach der Zuordnung nach Figur 16a wird beispielsweise das Fördersegment mit der Farbe rot eingefärbt, wenn der Stauwert größer als 2 ist. Nach der Zuordnung nach Figur 16a wird beispielsweise das Fördersegment mit der Farbe grün eingefärbt, wenn der Stauwert Q kleiner als 0,5.

Die Farbzuordnung gilt dann für alle dargestellten Fördersegmente, so dass anhand der Farbzuordnung etwaige Stau-Hotspots leicht identifiziert werden können.

Der Nutzer hat nun die Möglichkeit, die Farbzuordnung anzupassen. So kann er anhand einer Nutzereingabe N die Farbzuordnung ZF anpassen. Die Nutzereingabe ist als Schieberegler beispielhaft illustriert, anhand dem die Grenzwerte zwischen den einzelnen Farben verschoben werden können. Die Figuren 16 b und 16c zeigen dann Farbzuordnungen, die aufgrund einer Nutzereingabe geändert wurden. Die Einfärbungen der Fördersegmente können sich unmittelbar mit der Nutzereingabe ändern, so dass der Nutzer einen geeigneten Farbkontrast leicht einstellen kann. Der allgemeinere Begriff Festlegen umfasst dabei ein initiales Festlegen der Farbzuordnung sowie das spätere Ändern der Farbzuordnung.

Anhand der Figur 17a wird beispielhaft illustriert, wie eine Farbzuordnung ZF automatisiert verändert werden kann. Der Wert n bezeichnet hierbei eine Anzahl von Fördersegmenten, für denen ein gewisser Stauwert zugeordnet ist. Zu erkennen ist, dass die meisten Fördersegmente einen Stauwert Q < 0,25 aufweisen und. Lediglich ein geringe Anzahl weist einen Stauwert von Q ~ 1,5 auf. Stauwerte Q > 2 treten nicht auf.

Hierbei wird die Farbzuordnung nun so gewählt, dass die Maximalwerte automatisch in den roten Bereich fallen und damit visuell hervorgehoben werden.

Im Falle der Figur 17b herrscht im Bereich zwischen 0 und 4 eine Gleichverteilung. Im Bereich über 4 steigt die die Anzahl stark an. Auch werden die maximalen Stauwerte von Q=8 in den roten Bereich gesetzt. Um nun einen farblichen Kontrast zu generieren werden die Grenzen mit den weiteren Farben gelb und orange gleichmäßig im Gesamtbereich der auftretenden Stauwerte verteilt.

Die logarithmische Darstellung und die damit verbundene Verteilung ist hier nur beispielhaft; gleichsam ist eine lineare Darstellung mit entsprechender Verteilung möglich.

In einer Ausgestaltung wird die Farbzuordnung initial auf Basis der zugrudneliegenden Daten automatisch festgelegt. Anschließend wird dem Nutzer die Gelegenheit gegeben, die Farbzuordnung anhand einer Nutzereingabe zu verändern.

Ein weiterer Anwendungsfall der farblichen Einfärbung ist die Anzeige der Betriebsdauer einzelner Komponenten. Insbesondere Förderrollen weisen eine Nominallebensdauer auf. So kann aus den Rohdaten die Gesamtlaufzeit einer motorbetriebenen Förderrolle abgeleitet werden. Basierend auf der abgeleiteten Gesamtlaufzeit kann dann die Färbung eingestellt werden.

Auf diese Weise kann sich der Nutzer ein Bild von der Verteilung der Laufzeiten in der Förderanordnung machen und ggf. einzelne Förderrollen vorzeitig ersetzen. Alternativ lassen sich die Förderrolle einfach austauschen. So kann eine im Abbild grün eingefärbte Förderrolle mit einer im Abbild rot eingefärbten Förderrolle die Positionen tauschen. Eine bislang hoch beanspruchte Förderrolle wird so in eine Position in Förderanordnung eingesetzt, die eine geringer Auslastung der Förderrolle bedingt. Die gesamte Förderanordnung kann so effizienter genutzt werden und die Wahrscheinlichkeit für Verschleißausfälle reduziert werden.

Ein weiterer Anwendungsfall der farblichen Einfärbung ist die Darstellung von elektrischen Leistungsdaten. So können in einem Fördersegment die Summe der anfallenden elektrischen Leistung angezeigt werden (die aktuelle Leistung oder die durchschnittliche Leistung über einen gewissen Zeitraum). Etwaige Risiken von Überlastungen von Netzteilen, die die Versorgung mit elektrischer Energie sicherstellen, kann so visuell dargestellt werden.

Die enormen anfallenden Datenmengen erfordern eine definierte Verwaltung. Insbesondere sind Daten nach einer vordefinierten Weise zu löschen. So werden fördergutspezifische Datenmuster intern aus der internen Auswerteeinheit 14 der betreffenden Förderanordnung zumindest nach einer vordefinierten Zeit gelöscht, nachdem das Fördergut die Förderanordnung verlässt. Fördersegmentspezifische Muster werden nach einer vordefinierten Zeit aus der internen Auswerteeinheit 14 der betreffenden Förderanordnung gelöscht, nachdem die Ursache für das fördersegmentspezifische Muster behoben wurde, beispielsweise nachdem eine defekte motorbetriebene Förderrolle ausgetauscht wurde.

Die Löschung wir dabei auf unterschiedlichen Ebene gehandhabt: Selbst nachdem die Ursachen (spezielles Fördergut, defekte Hardware) der Datenmuster nicht mehr in den entsprechenden Förderanordnungen vorhanden sind, können die Datenmuster für eine weitere Verwendung der zentralen Auswerteeinheit zur Verfügung stehen, insbesondere in einer zentralen Datenbasis.

### Bezugszeichenliste

- 1: Förderanordnung
- 1B: Abbild der Förderanordnung
- 2a...e: Fördersegment
- 3: Förderrolle
- 3M: Motorrolle
- 4: Verbinder
- 5: Präsenzsensor
- 8: Stützrahmen
- 9: Fördergut
- 100: Fördernetzwerk

- 11: Zonensteuerung
- 12: Anlagensteuerung
- 13: Busverbindung
- 14: lokale / interne Auswerteeinheit
- 15: lokales Gateway
- 16: Anzeigevorrichtung
- 17: Fördergutdatenbank
- 17S: Fördergutdatensatz
- 18: Datenfernverbindung
- 19: zentrale Auswerteeinheit
- 20a... e: Datensatz eines Fördersegments
- 200: Datensammlung von Datensätzen mehrerer Fördersegmente
- F: Förderrichtung
- R: Rohdaten:
S5 Signal eines Präsenzsensors
I3 Motorstrom der motorbetriebene Förderrolle
C Steuersignale
Abgeleitete Daten:
- V3: Geschwindigkeit der motorbetriebenen Förderrolle
- L: Länge eines Förderguts
- M: Datenmuster
- M1, M2..: erstes, zweites, .. Datenmuster
- T1, T2: erste, zweite Dauer
- L: lokaler Bereich
- ZF: Farbzuordnung

## Patentansprüche

1. Verfahren zum Betreiben einer Förderanordnung (1), insbesondere umfassend die Steuerung und/oder die Überwachung der Förderanordnung,
die Förderanordnung (1) umfasst eine Mehrzahl an Fördersegmenten (2a..e), jedes Fördersegment (2) ist eingerichtet zur Förderung eines Förderguts (9) entlang einer Förderrichtung (F);
die Fördersegmente (2) sind derart nacheinander angeordnet, damit das Fördergut (9) von einem stromaufwärtigen Fördersegment (2a..2d) an ein stromabwärtiges Fördersegment (2b..e) übergeben wird,
jedes Fördersegment (2) weist einen Fördersegmentantrieb (3M) auf, der eingerichtet ist, eine Antriebskraft, insbesondere isoliert für dieses Fördersegment, bereitzustellen, um so das Fördergut (9) auf diesem Fördersegment zu fördern; insbesondere weist jedes Fördersegment (2) eine Präsenzerkennung, insbesondere einen Präsenzsensor (5), eingerichtet zur Erkennung der Anwesenheit eines Förderguts (9) auf dem Fördersegment (2) auf,
jedem Fördersegment (2) ist eine Zonensteuerung (11) zur Steuerung des Fördersegmentantriebs (3M) zugeordnet;
insbesondere ist eine übergeordnete Anlagensteuerung (12) vorgesehen, um die Mehrzahl der Fördersegmente (2) anzusteuern und/oder die Mehrzahl an Zonensteuerung (11) anzusteuern;
das Verfahren umfasst die folgenden Verfahrensschritte:
**Erfassen** von Fördersegmentdaten (R), die beim Betrieb eines Fördersegments (2) anfallen, und
**Sammeln** von Fördersegmentdaten (R) von einer Vielzahl von Fördersegmenten.

2. Verfahren nach dem vorherigen Anspruch,
**dadurch gekennzeichnet,**
**dass** die Fördersegmentdaten Rohdaten (R) sowie abgeleiteten Daten (A) umfassen;
wobei die Rohdaten (R) solche Daten umfassen, die anhand eines im Fördersegment (2) angeordneten Sensors (5) erfasst werden (I3, S5) oder als Steuerdaten (C) zur der Ansteuerung des Fördersegments von einer Steuerung (11, 12) erzeugt werden;
wobei die abgeleiteten Daten (A) rechnerisch isoliert aus Rohdaten (R) eines einzelnen Fördersegmentes erzeugt werden.

3. Verfahren nach einem der vorherigen Ansprüche,
wobei die Fördersegmentdaten (R, A, 5S, V3, I3, C), die beim Betrieb von einer Vielzahl von Fördersegmenten (2a..e) anfallen, in einer Datensammlung (200) zusammengefasst werden;
insbesondere wobei die Fördersegmentdaten (R, A, 5S, V3, I3, C), die beim Betrieb eines Fördersegmentes anfallen, in einem Datensatz (20) zusammengefasst werden und/oder dass die Datensätze (20..e) einer Vielzahl von Fördersegmenten (2a..e) in der Datensammlung (200) zusammengefasst werden.

4. Verfahren nach einem der vorherigen Ansprüche,
**gekennzeichnet durch** den folgenden Verfahrensschritt:
**Identifizieren**, insbesondere in einem Musteridentifizierungsschritt, von Datenmustern (M) aus der Datensammlung (200).

5. Verfahren nach dem vorherigen Anspruch,
**dadurch gekennzeichnet**,
**Spezifizieren**, insbesondere in einem Musterspezifizierungsschritt, der identifizierten Datenmuster (M),
wobei einem Datenmuster eine Musterspezifikation aus einer Mehrzahl von Musterspezifikationen zugeordnet wird,
wobei die Mehrzahl von Musterspezifikationen
- fördergutspezifische Datenmuster (M1) und
- fördersegmentspezifische Datenmuster (M2), umfassen.

6. Verfahren nach dem vorherigen Anspruch,
**dadurch gekennzeichnet,**
**dass** bei der Identifizierung von fördergutspezifischen Datenmustern fördersegmentindividuelle Daten berücksichtigt werden;
insbesondere
- wobei die fördersegmentindividuellen Daten statische Metadaten umfassen, die in einer Datenbasis hinterlegt sind;
und/oder
- wobei zur Kompensation von abweichender Hardware zwischen den Fördersegmenten ein fördersegmentspezifisches Datenmuster zur Kompensation der Abweichung berücksichtigt wird.

7. Verfahren nach einem der Ansprüche 5 bis 6,
**dadurch gekennzeichnet,**
**dass** auf Basis anhand eines fördergutspezifisches Datenmusters (M1) ein fördergutindividueller Fördergutdatensatz (17S) in einer Fördergutdatenbank (17) angepasst wird,
insbesondere wobei ein fördergutindividueller Fördergutdatensatz (17S) Angaben zur Identität des Förderguts, zum Ziel des Förderguts und/oder von physikalischen Werten des Förderguts aufweist, und/oder
insbesondere wobei eine Anlagensteuerung (12) der Förderanordnung (1) Zugriff auf die fördergutindividuellen Fördergutdatensatz (17S) der Fördergutdatenbank (17) verfügt zum Zwecke zur Steuerung der Förderanordnung.

8. Verfahren nach einem der Ansprüche 4 bis 7,
**dadurch gekennzeichnet,**
**dass** die Datenmuster (M1, M2) anhand einer lokalen Auswerteeinheit (14) identifiziert werden,
insbesondere wobei die identifizierten Muster (M1, M2) über eine Datenfernverbindung (18) an eine externen, insbesondere zentrale, Auswerteeinheit (19) übermittelt werden.

9. Verfahren nach einem der Ansprüche 4 bis 8,
**dadurch gekennzeichnet,**
**dass** auf Basis eines identifizierten Musters (M1, M2) eine Handlungsanweisung (IH) bestimmt wird, und basierend auf der bestimmten Handlungsanweisung (EH, IH) ein Steuerbefehl (C) an einen Aktuator (3M) innerhalb der Förderanordnung (1) ausgegeben wird.

10. Verfahren nach einem der Ansprüche 4 bis 9,
**dadurch gekennzeichnet,**
**dass** ein Datenmuster identifiziert wird auf Basis von Fördersegmentdaten (R, A) aus einer Anzahl von ersten Fördersegmenten (2a..d; 2b..e);
und **dass** die bestimmte Handlungsanweisung (IH, EH) an ein zweites Fördersegment (2e; 2a) ausgegeben wird, welches nicht Bestandteil der Anzahl von ersten Fördersegmenten (2a..d; 2b..e) ist, auf deren Basis das Muster erkannt wurde;
insbesondere dass das zweite Fördersegment (2e) stromabwärts der Anzahl von ersten Fördersegmenten (2a..d) angeordnet ist oder dass das zweite Fördersegment (2a) stromaufwärts der Anzahl von ersten Fördersegmenten (2b..e) angeordnet ist.

11. Verfahren nach einem der Ansprüche 9 bis 10,
**dadurch gekennzeichnet,**
**dass** ein Datenmuster identifiziert wird auf Basis von Fördersegmentdaten (R, A) einer ersten Förderanordnung (1a..d);
und **dass** die bestimmte Handlungsanweisung (IH, EH) an eine zweite Förderanordnung (1d) ausgegeben wird, die abweichend ist zu der ersten Förderanordnung.

12. Verfahren nach einem der Ansprüche 9 bis 11,
**dadurch gekennzeichnet,**
**dass** bei der Bestimmung einer Handlungsanweisung (EH, IH) auf einen Katalog (K) von vordefinierten Zuordnungen (Z) zugegriffen wird,
wobei der Katalog eine Mehrzahl an Zuordnungen (Z) zwischen identifizierten Datenmustern (M1, M2, .. ) und Handlungsanweisungen (EH, IH) enthält.

13. Verfahren nach einem der Ansprüche 4 bis 12,
**dadurch gekennzeichnet,**
**dass** anhand eines identifizierten, insbesondere fördergutspezifischen, Datenmusters eine Wiedererkennung eines Förderguts in einem Fördersegment festgestellt wird, und
**dass** anhand eines Datenmusters gezielt eine Nichtidentität mit einem erwarteten Fördergut festgestellt wird.

14. Verfahren nach einem der Ansprüche 4 bis 13,
**dadurch gekennzeichnet,**
**dass** die identifizierten Datenmuster definiert einem Löschungsschritt unterzogen, wobei die Datenmuster in Abhängigkeit von deren Speicherhort (14, 19) und von deren Spezifizierung gelöscht werden;
insbesondere wobei fördergutspezifische Datenmuster aus einer lokalen Auswerteinheit (14) gelöscht werden, wenn das Fördergut, auf welches sich das Datenmuster bezieht, diejenige Förderanordnung, deren Bestandteil die Auswerteinheit ist, verlassen hat.

15. Verfahren nach einem der Ansprüche 4 bis 14,
**dadurch gekennzeichnet,**
**dass** die Fördersegmente der Förderanordnung definiert in einen Datenmustergenerierungsmodus überführt werden, in dem eine Wechselwirkung zwischen dem Fördersegment und einem darin angeordneten Fördergut stattfindet; wobei die Fördersegmente zeitlich koordiniert in den Datenmustergenerierungsmodus überführt werden, so dass die Wechselwirkung zwischen den unterschiedlichen Fördersegmenten und einem jeweils identischen Fördergut stattfindet,
insbesondere um gezielt Fördersegmentdaten zu erzeugen, anhand welchen ein fördersegmentspezifische Datenmuster für mehrere Fördersegmente zu erzeugen.

16. Verfahren nach einem der vorherigen Ansprüche,
**dadurch gekennzeichnet,**
**dass** Abbilder (2B) von mehreren Fördersegmenten (2) der Förderanordnung (1) graphisch auf einer Anzeigevorrichtung (16) dargestellt werden,
die räumliche Anordnung der Abbilder (2B) zueinander entspricht einer räumlichen Anordnung der durch die Abbilder (2B) dargestellten Fördersegmenten (2) zueinander,
insbesondere wobei das Abbild (2B) eine graphische Darstellung der Fördersegmente in Draufsicht umfasst.

17. Verfahren nach einem der vorherigen Ansprüche,
**dadurch gekennzeichnet,**
**dass** basierend auf den erfassten Fördersegmentdaten (R, A), insbesondere auf Basis eines fördersegmentspezifischen Datenmusters (M3), eines der Abbilder oder mehrere der Abbilder mit einer datenabhängigen Färbung versehen werden, insbesondere wobei die Färbung auf Basis einer, insbesondere hinterlegten, Farbzuordnung (ZF) erfolgt, wobei die Farbzuordnung einer Kenngröße (Q), die auf Fördersegmentdaten (R, A) basiert, eine Färbung zuordnet,
insbesondere wobei die Farbzuordnung variabel ist.

18. Verfahren nach dem vorherigen Anspruch,
**dadurch gekennzeichnet,**
- **dass** die variable Farbzuordnung (ZF) anhand einer Nutzereingabe (N) festgelegt wird; und/oder
- **dass** die variable Farbzuordnung (ZF) automatisiert festgelegt wird;
insbesondere dass die Farbzuordnung (ZF) initial automatisiert festgelegt wird und anschließend dem Nutzer eine Möglichkeit zur Veränderung der Farbzuordnung anhand einer Nutzereingabe (N) gegeben wird.
